# EUROPEAN PATENT APPLICATION

(11) **EP 4 697 766 A1**
(43) Date of publication of application: **18.02.2026**
(21) Application number: 23932368.6
(22) Date of filing: 10.04.2023
(51) Int. Cl.: H04W 8/14

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN)
(74) Representative: Mewburn Ellis LLP
(86) International application number: PCT/CN2023/087402
(87) International publication number: WO 2024/212068

(57) **Abstract**

The disclosure relates to a communication method, device, computer-readable storage medium, computer program product, and computer program. The method includes: a network device sends a first message to a terminal device, where the first message is used by the terminal device to determine whether the terminal device is located in a first registration update area. The first registration update area is an area where the terminal device triggers a registration update process, and the first registration update area is one of multiple registration areas of the terminal device. Each of the plurality of registration areas is a candidate area where the terminal device can trigger the registration update process.

## Description

### TECHNICAL FIELD

This application relates to the field of communication, and more specifically, to a communication method, device, computer-readable storage medium, computer program product, and computer program.

### BACKGROUND

In the related art, the registration process of a user equipment (UE) is as follows: the core network device allocates a registration area to the UE; when the UE moves out of the registration area, the UE initiates a registration update process; if the UE is constantly moving, this will trigger a large number of registration update processes.

In zero-power communication systems, zero-power terminals also need to perform registration update processes. However, the way the UE performs registration update processes as described above will result in frequent triggering of mobility registration update processes, which requires a significant amount of battery energy. This is clearly contrary to the performance requirements of zero-power terminals. Therefore, how to enable zero-power terminals to perform registration update processes while reducing the frequency of these processes and thereby reducing the energy consumption of the zero-power terminal devices has become a problem to be solved.

### SUMMARY

The disclosure provides a communication method, device, computer-readable storage medium, computer program product, and computer program.

The disclosure provides a communication method, including: a network device sends a first message to a terminal device, where the first message is used for the terminal device to determine whether the terminal device is located in a first registration update area, the first registration update area is an area where the terminal device triggers the registration update process, the first registration update area is one of multiple registration areas of the terminal device, and each registration area in the multiple registration areas is a candidate area where the terminal device can trigger the registration update process.

The disclosure provides a communication method, including: a terminal device receives a first message sent by a network device, where the first message is used for the terminal device to determine whether the terminal device is located in a first registration update area, the first registration update area is an area where the terminal device triggers the registration update process, the first registration update area is one of multiple registration areas of the terminal device, and each registration area in the multiple registration areas is a candidate area where the terminal device can trigger the registration update process.

The disclosure provides a network device, including: a first communication unit, configured to send a first message to a terminal device, where the first message is used for the terminal device to determine whether the terminal device is located in a first registration update area, the first registration update area is an area where the terminal device triggers the registration update process, the first registration update area is one of multiple registration areas of the terminal device, and each registration area in the multiple registration areas is a candidate area where the terminal device can trigger the registration update process.

The disclosure provides a terminal device, including: a second communication unit, configured to receive a first message sent by a network device, where the first message is used for the terminal device to determine whether the terminal device is located in a first registration update area, the first registration update area is an area where the terminal device triggers the registration update process, the first registration update area is one of multiple registration areas of the terminal device, and each registration area in the multiple registration areas is a candidate area where the terminal device can trigger the registration update process.

The disclosure provides a network device, including a transceiver, processor, and memory. The memory is configured to store computer programs, the processor is configured to invoke and run the computer programs stored in the memory, so that the network device performs the above method.

The disclosure provides a terminal device, including a transceiver, processor, and memory. The memory is configured to store computer programs, the processor is configured to invoke and run the computer programs stored in the memory, so that the terminal device performs the above method.

The disclosure provides a chip, configured to implement the above method.

Specifically, the chip includes: a processor, configured to call and run computer programs from the memory, so that the device installed with the chip performs the above method.

The disclosure provides a computer-readable storage medium, configured to store computer programs, when the computer program is run by a device, it makes the device perform the above method.

The disclosure provides a computer program product, including computer program instructions, the computer program instructions make the computer perform the above method.

The disclosure provides a computer program, when it runs on a computer, it makes the computer perform the above method.

By adopting the solution provided in this embodiment, the network device sends a first message to the terminal device, which can be used by the terminal device to determine whether the terminal device is located in the first registration update area that triggers the registration update process. The first registration update area is one of the multiple registration areas of the terminal device, and these multiple registration areas are candidate areas where the terminal device can trigger the registration update process. Thus, the terminal device only needs to perform the registration update process in certain candidate areas, avoiding the problem of consuming a large amount of power as in the related art where the terminal device performs the registration update process as soon as it moves out of a registration area. This can ensure that the terminal device performs the registration update process while reducing the frequency of performing the registration update process, thereby reducing the energy consumption of the terminal device.

### BRIEF DESCRIPTION OF THE DRAWINGS

FIG. 1 is a schematic diagram of an application scenario according to an embodiment of the disclosure.
FIG. 2 is a schematic diagram of a 5G network system architecture according to an embodiment of the disclosure.
FIG. 3 is a schematic diagram of a zero-power system architecture.
FIG. 4 is a schematic diagram of a registration process.
FIG. 5 is a schematic flowchart of a communication method according to an embodiment of the disclosure.
FIG. 6 is a schematic flowchart of a communication method according to another embodiment of the disclosure.
FIG. 7 is a schematic diagram of a scenario with multiple registration areas according to an embodiment of the disclosure.
FIG. 8A to FIG. 8B are schematic diagrams of various example processes of a communication method according to an embodiment of the disclosure.
FIG. 9A to FIG. 9B are schematic diagrams of various example processes of a communication method according to another embodiment of the disclosure.
FIG. 10 is a schematic block diagram of a network device according to an embodiment of the disclosure.
FIG. 11 is a schematic block diagram of a network device according to another embodiment of the disclosure.
FIG. 12 is a schematic block diagram of a terminal device according to an embodiment of the disclosure.
FIG. 13 is a schematic block diagram of a terminal device according to another embodiment of the disclosure.
FIG. 14 is a schematic block diagram of a communication device according to an embodiment of the disclosure.
FIG. 15 is a schematic block diagram of a chip according to an embodiment of the disclosure.
FIG. 16 is a schematic block diagram of a communication system according to an embodiment of the disclosure.

### DETAILED DESCRIPTION

Technical solutions of the embodiments of the disclosure will be described below with reference to the accompanying drawings.

The technical solutions of the embodiments of the disclosure can be applied to various communication systems, such as a global system for mobile communication (GSM) system, a code division multiple access (CDMA) system, a wideband code division multiple access (WCDMA) system, a general packet radio service (GPRS), a long-term evolution (LTE) system, an advanced long-term evolution (LTE-A) system, a new radio (NR) system, an evolved NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a fifth-generation (5G) communication system, or other communication systems.

Generally, traditional communication systems support a limited number of connections and are easy to implement. However, with the development of communication technologies, mobile communication systems will not only support traditional communication but also support, for example, device-to-device (D2D) communication, machine-to-machine (M2M) communication, machine-type communication (MTC), vehicle-to-vehicle (V2V) communication, or vehicle-to-everything (V2X) communication. The embodiments of the disclosure can also be applied to these communication systems.

In a possible implementation, the communication system in the embodiments of the disclosure can be applied to a carrier aggregation (CA) scenario, a dual connectivity (DC) scenario, or a standalone (SA) deployment scenario.

In another possible implementation, the communication system in the embodiments of the disclosure can be applied to an unlicensed spectrum, where the unlicensed spectrum can also be considered a shared spectrum. Alternatively, the communication system can also be applied to a licensed spectrum, where the licensed spectrum can be considered a non-shared spectrum.

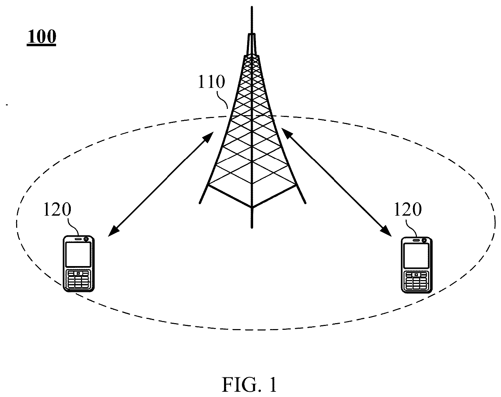

FIG. 1 exemplarily illustrates a communication system 100. The communication system includes a network device 110 and two terminal devices 120. In a possible implementation, the communication system 100 can include multiple network devices 110, and each network device 110 can cover other numbers of terminal devices 120 within its coverage range, which is not limited in the embodiments of the disclosure.

In another possible implementation, the communication system 100 can further include other network entities such as a mobility management entity (MME) or an access and mobility management function (AMF), which is not limited in the embodiments of the disclosure.

The terminal device can also be referred to as user equipment (UE), an access terminal, a subscriber unit, a subscriber station, a mobile station, a mobile terminal, a remote station, a remote terminal, a mobile device, a user terminal, a terminal, a wireless communication device, a user agent, or a user apparatus. The terminal device can be a station (STA) in a WLAN, a cellular phone, a cordless phone, a session initiation protocol (SIP) phone, a wireless local loop (WLL) station, a personal digital assistant (PDA), a handheld device with wireless communication capabilities, a computing device, another processing device connected to a wireless modem, an in-vehicle device, a wearable device, a terminal device in a next-generation communication system such as an NR network, or a terminal device in a future evolved public land mobile network (PLMN).

In the embodiments of the disclosure, the terminal device can be deployed on land, including indoors or outdoors, handheld, wearable, or in-vehicle; it can also be deployed on water (e.g., on a ship); or it can be deployed in the air (e.g., on an aircraft, balloon, or satellite). In the embodiments of the disclosure, the terminal device can be a mobile phone, a Pad, a computer with wireless transceiver capabilities, a virtual reality (VR) terminal device, an augmented reality (AR) terminal device, a wireless terminal device in industrial control, a wireless terminal device in self-driving, a wireless terminal device in remote medical, a wireless terminal device in a smart grid, a wireless terminal device in transportation safety, a wireless terminal device in a smart city, or a wireless terminal device in a smart home.

As an example and not a limitation, in the embodiments of the disclosure, the terminal device can also be a wearable device. A wearable device, also known as a wearable smart device, is a general term for devices designed with wearable technology to intelligently integrate into daily wearables, such as glasses, gloves, watches, clothing, and shoes. Wearable devices are portable devices worn directly on the body or integrated into the user's clothing or accessories. Wearable devices are not just hardware devices but also achieve powerful functions through software support, data interaction, and cloud interaction. Broadly defined wearable smart devices include full-featured, large-sized devices that can operate independently of smartphones, such as smartwatches or smart glasses, as well as devices focused on specific applications that need to work with other devices like smartphones, such as various smart bracelets or smart jewelry for monitoring physiological signs.

The network device can further include an access network device and a core network device. That is, the wireless communication system can further include multiple core networks for communicating with the access network device. The access network device can be an evolutional Node B (eNB or e-NodeB), a macro base station, a micro base station (also referred to as a "small base station"), a pico base station, an access point (AP), a transmission point (TP), or a new generation Node B (gNodeB) in an LTE system, a next-generation (mobile communication system) (new radio, NR) system, or an authorized auxiliary access long-term evolution (LAA-LTE) system).

In the embodiments of the disclosure, the network device can be a device for communicating with mobile devices. The network device can be an access point (AP) in a WLAN, a base transceiver station (BTS) in GSM or CDMA, a Node B (NB) in WCDMA, an evolved Node B (eNB or eNodeB) in LTE, a relay station, an access point, an in-vehicle device, a wearable device, a network device (gNB) in an NR network, a network device in a future evolved PLMN, or a network device in an NTN.

As an example and not a limitation, in the embodiments of the disclosure, the network device can have mobility characteristics, such as being a mobile device. Optionally, the network device can be a satellite or a balloon station. For example, the satellite can be a low earth orbit (LEO) satellite, a medium earth orbit (MEO) satellite, a geostationary earth orbit (GEO) satellite, or a high elliptical orbit (HEO) satellite. Optionally, the network device can also be a base station deployed on land or water.

In the embodiments of the disclosure, the network device can provide services for a cell. The terminal device communicates with the network device through transmission resources (e.g., frequency domain resources or spectrum resources) used by the cell. The cell can be a cell corresponding to the network device (e.g., a base station), and the cell can belong to a macro base station or a base station corresponding to a small cell. Here, the small cell can include a metro cell, a micro cell, a pico cell, or a femto cell. These small cells have small coverage ranges and low transmission power, making them suitable for providing high-speed data transmission services.

It should be understood that devices with communication functions in the network/system in the embodiments of the disclosure can be referred to as communication devices. Taking the communication system illustrated in FIG. 1 as an example, the communication devices can include network devices and terminal devices with communication functions. The network devices and terminal devices can be specific devices in the embodiments of the disclosure, and details are not repeated here. The communication devices can also include other devices in the communication system, such as a network controller or a mobility management entity, which are not limited in the embodiments of the disclosure.

To facilitate understanding of the embodiments of the disclosure, basic processes and concepts involved in the embodiments are briefly described below. It should be understood that the basic processes and concepts described below do not limit the embodiments of the disclosure.

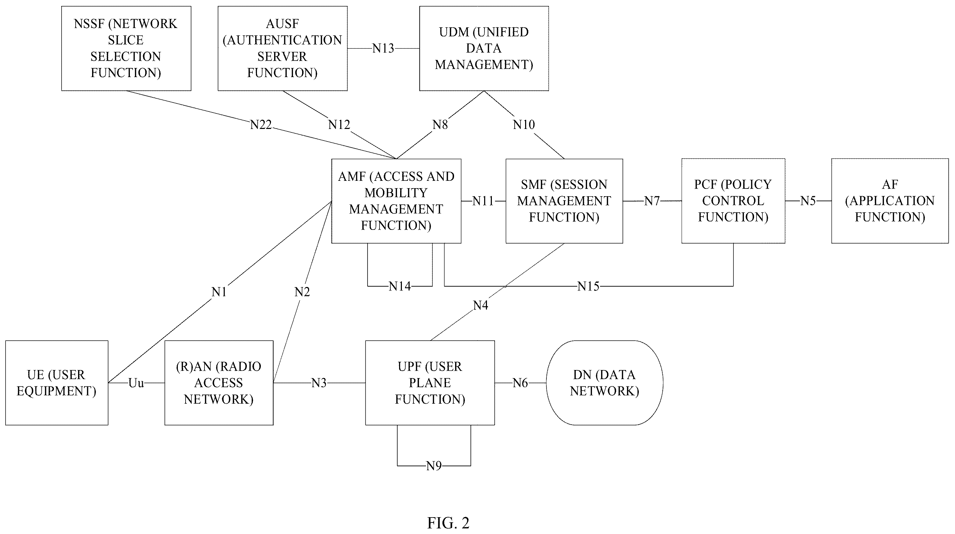

In the 5G network system architecture illustrated in FIG. 2, the system includes: a network slice selection function (NSSF), which is mainly used for managing network slice-related information, such as selecting network slices for terminal devices; an authentication server function (AUSF), which is used to complete identity authentication for user access; a unified data management (UDM), which is used to manage and store subscription data and authentication data; an access and mobility management function (AMF), which is used to complete mobility management, security anchoring, and security context management. In addition to mobility management for UEs, the AMF is also responsible for forwarding session management-related messages between the UE and a session management function (SMF); the SMF is used to complete session management, UE IP address allocation, and management; a policy control function (PCF) is responsible for formulating policies related to mobility management, session management, and charging for UEs; an application function (AF) is used for external application servers; a user plane function (UPF) is used for complex user plane processing, such as forwarding traffic between a radio access network and the internet, reporting traffic usage, and implementing quality of service (QoS) policies; and a data network (DN) is an external data network of the 5G core network (5GC), such as the internet.

In addition, data transmission between nodes in the 5GC, between the UE and nodes in the 5GC, between the UE and a radio access network (RAN), and between the RAN and nodes in the 5GC is performed through corresponding interfaces. For example, as illustrated in FIG. 2, the AMF in the 5GC and the NSSF perform data transmission through an N22 interface; the AMF and the SMF perform data transmission through an N11 interface; the AMF and the AUSF perform data transmission through an N12 interface; and the AMF and the UDM perform data transmission through an N8 interface. The SMF and the UPF perform data transmission through an N4 interface. The UPF and an external data network perform data transmission through an N6 interface, and the UPF and the AN perform data transmission through an N3 interface. The UE establishes an access stratum connection with the AN through a Uu interface to exchange access stratum messages and perform wireless data transmission. The UE establishes a non-access stratum (NAS) connection with the AMF through an N1 interface to exchange NAS messages. The RAN and the AMF perform data transmission through an N2 interface, and the RAN and the UPF perform data transmission through an N3 interface. It should be understood that the above only describes some interfaces between nodes, and other interfaces between nodes in the 5GC are not described in detail here.

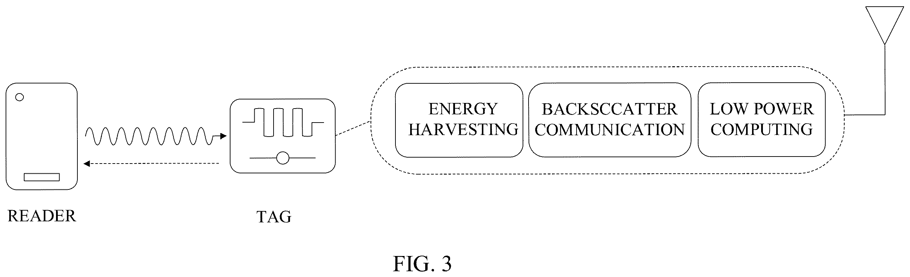

A zero-power communication network is a wireless communication technology suitable for short-distance, low-rate communication. Zero-power devices mainly combine radio frequency energy harvesting technology, backscatter communication technology, and low-power computing technology to achieve the advantage of not requiring a power supply for device nodes. The basic architecture of a zero-power system is illustrated in FIG. 3, which includes a reader (tag reader) and a tag. The tag can perform energy harvesting, backscatter communication, and low-power computing. Energy harvesting, also known as radio frequency energy collection, converts radio frequency energy into direct current. The energy can be stored in a battery or capacitor, or it can be directly used to drive logic circuits, digital chips, or sensor devices after collection, completing functions such as modulation and transmission of backscatter signals, collection and processing of sensing information, and applications. "Tag" is a type of zero-power terminal. It should be understood that in actual scenarios, zero-power terminals can be tags or ordinary devices, which are not limited here.

With the development of 5G systems, the 3GPP standard has a requirement for 5G systems to support zero-power terminal access to the network. The main scenarios involved have the following characteristics: extreme environments unsuitable for ordinary terminals, terminals with very low power consumption and cost, and battery-free terminals. Zero-power communication systems can be used in scenarios such as wireless industrial sensor networks, smart agriculture, smart warehousing and logistics, and smart homes.

Based on the energy source and usage of zero-power terminals, zero-power terminals can be classified into the following types. (1) Passive zero-power terminals: passive zero-power terminals do not require built-in batteries. When a passive zero-power terminal approaches a network device (e.g., a reader in an RFID system), the terminal is within the near-field range formed by the antenna radiation of the network device. Therefore, the antenna of the passive zero-power terminal generates an induced current through electromagnetic induction, which drives the low-power chip circuit of the terminal. This enables demodulation of forward link signals and modulation of reverse link signals. For the backscatter link, passive zero-power terminals use backscatter for signal transmission. (2) Semi-passive zero-power terminals: semi-passive zero-power terminals also do not have conventional batteries but can use an RF energy harvesting module to collect radio wave energy and store the collected energy in an energy storage unit (e.g., a capacitor). After the energy storage unit obtains energy, it can drive the low-power chip circuit of the semi-passive zero-power terminal to demodulate forward link signals and modulate reverse link signals. For the backscatter link, semi-passive zero-power terminals use backscatter for signal transmission. (3) Active zero-power terminals: in some scenarios, zero-power terminals can also be active zero-power terminals, which can have built-in batteries. The battery is used to drive the low-power chip circuit of the active zero-power terminal to demodulate forward link signals and modulate reverse link signals. However, for the backscatter link, active zero-power terminals use backscatter for signal transmission. Therefore, the zero-power feature of such terminals is mainly reflected in the fact that the reverse link signal transmission does not require the terminal's own power but uses backscatter. Active zero-power terminals have built-in batteries that power RFID chips to increase the reading and writing distance of the tag and improve communication reliability. Therefore, they are applied in scenarios with relatively high requirements for communication distance and reading latency.

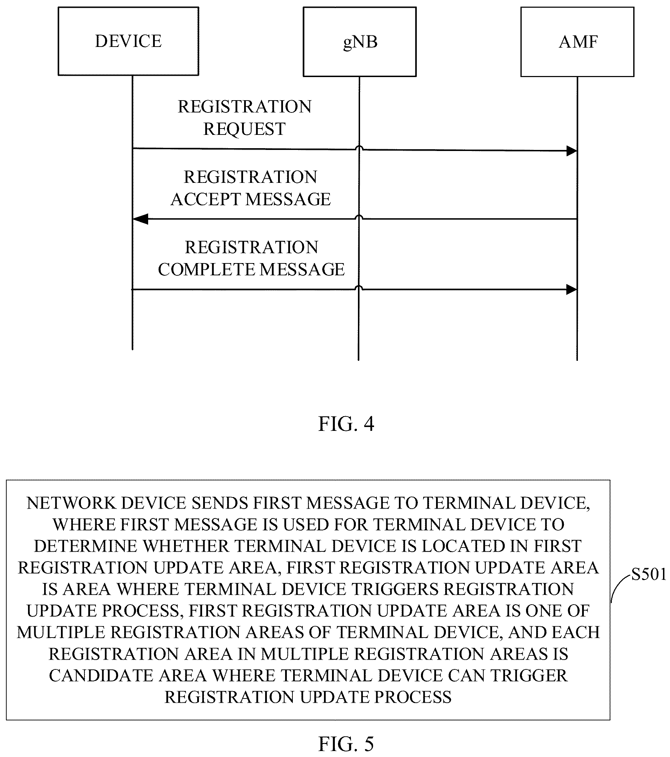

The specific registration process in the 5G architecture is illustrated in FIG. 4, where the UE is represented as a device. The process includes: the device sends a registration request to the AMF, the AMF sends a registration accept message to the device, and then the device sends a registration complete message to the AMF. FIG. 4 omits the RRC connection establishment process between the UE and the radio access network (RAN), the N2 message interaction process between the RAN and the AMF, and the subscription data acquisition process between the AMF and the UDM. These registration processes are managed for each UE, including temporary allocation for each UE and maintenance of the connection state or mobility management state for each UE. The state transitions between these mobility management states are performed through NAS messages. To send or receive data (even if only a small amount of data is sent or received), the UE also needs to establish a PDU session.

In the existing UE registration process, the AMF allocates a registration area to the UE. When the UE moves out of the registration area, the UE initiates a mobility registration update process. If the UE is continuously moving, this will trigger a large number of mobility registration update processes.

In some possible scenarios, zero-power terminals may move. For example, in logistics scenarios, when a zero-power terminal is attached to an item, the terminal will move with the item. In such scenarios, if the same method as for UEs is used for registration updates, frequent triggering of mobility registration update processes will require significant battery energy consumption, which clearly contradicts the performance requirements of zero-power terminals.

It should be understood that the terms "system" and "network" in this document are often used interchangeably. The term "and/or" in this document describes only an association relationship between associated objects, indicating that three relationships may exist. For example, A and/or B may indicate: A alone, both A and B, or B alone. In addition, the character "/" in this document generally indicates an "or" relationship between the associated objects.

It should be understood that the term "indication" mentioned in the embodiments of the disclosure may be direct indication, indirect indication, or an indication of an association relationship. For example, A indicating B may mean that A directly indicates B (e.g., B can be obtained through A), that A indirectly indicates B (e.g., A indicates C, and B can be obtained through C), or that there is an association relationship between A and B.

In the embodiments of the disclosure, the term "corresponding" may mean that there is a direct or indirect correspondence between the two, or that there is an association relationship between the two, or that there is a relationship of indication and being indicated, configuration and being configured, etc.

To facilitate understanding of the technical solutions of the embodiments of the disclosure, the related technologies of the embodiments are described below. The following related technologies can be combined with the technical solutions of the embodiments in any manner, and all such combinations fall within the protection scope of the embodiments of the disclosure.

FIG. 5 is a schematic flowchart of a communication method according to an embodiment of the disclosure. The method includes at least part of the following content.

S510: a network device sends a first message to a terminal device, where the first message is used by the terminal device to determine whether the terminal device is located in a first registration update area. The first registration update area is an area where the terminal device triggers a registration update process, and the first registration update area is one of multiple registration areas of the terminal device. Each of the multiple registration areas is a candidate area where the terminal device can trigger the registration update process.

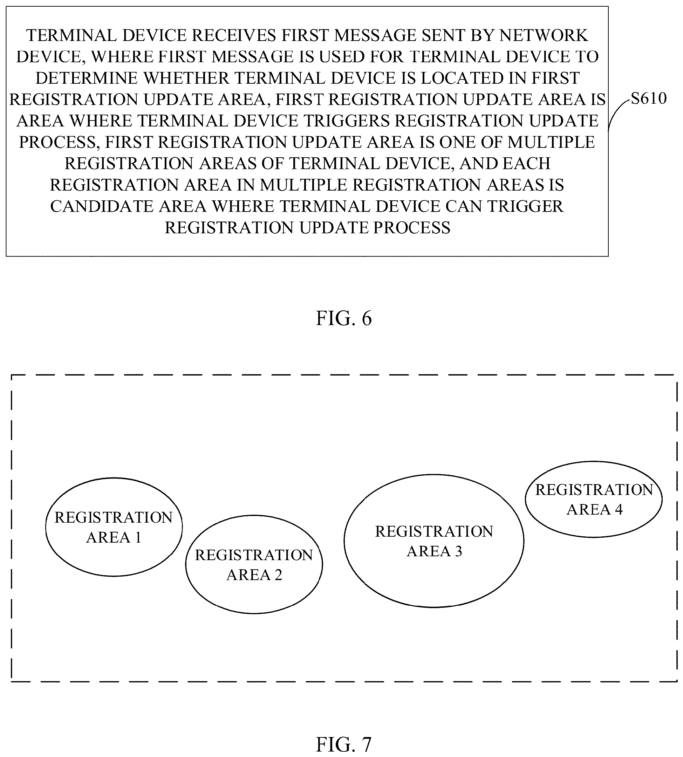

FIG. 6 is a schematic flowchart of another communication method according to an embodiment of the disclosure. The method includes at least part of the following content.

S610: a terminal device receives a first message sent by a network device, where the first message is used by the terminal device to determine whether the terminal device is located in a first registration update area. The first registration update area is an area where the terminal device triggers a registration update process, and the first registration update area is one of multiple registration areas of the terminal device. Each of the multiple registration areas is a candidate area where the terminal device can trigger the registration update process.

Here, the network device is a core network device, which may also be referred to as a core network element. In a preferred example, the core network device may be an AMF. In some other examples, the core network device may be any one of the following: an SMF, a network exposure function (NEF), or a new network function (NF) established for the internet of things (IoT). This new NF for IoT may be referred to as an IoT NF. Further, the IoT may include ambient power-enabled IoT (AIoT), Passive IoT, or at least one of the above.

The terminal device is a zero-power device. For example, the zero-power device may be set or fixed on a target object. For instance, in a logistics scenario, the target object may be an item to be transported, and the zero-power device may be attached to the item. It should be understood that this is only an example and does not limit the embodiments.

The number of the multiple registration areas may be two or more, such as 4, 5, 10, or more or fewer, and the possible numbers are not exhaustively listed. Different registration areas among the multiple registration areas may not overlap. Here, non-overlapping between different registration areas means that the geographical locations of different registration areas do not overlap. Further, among all registration areas, there may be adjacent registration areas whose geographical locations are adjacent but do not overlap, and/or there may be adjacent registration areas whose geographical locations are completely non-adjacent. All possible scenarios are not exhaustively listed here. In addition, among the multiple registration areas, the sizes of different registration areas may be the same or different, all of which are within the protection scope of the embodiments.

Referring to FIG. 7 for an example, FIG. 7 illustrates multiple registration areas of a terminal device within a certain range (i.e., the area covered by the dashed box in FIG. 7). The number of registration areas is four, namely registration area 1, registration area 2, registration area 3, and registration area 4. As can be seen from FIG. 7, any two registration areas among registration areas 1 to 4 do not overlap.

Before the terminal device receives the first message sent by the network device, the method further includes: the terminal device sends a second message to the network device, where the second message is used to trigger a registration process, and the second message carries identification information of the terminal device and/or area parameters of the terminal device. Correspondingly, before the network device sends the first message to the terminal device, the method further includes: the network device receives the second message sent by the terminal device, where the second message is used to trigger the registration process, and the second message carries the identification information of the terminal device and/or the area parameters of the terminal device.

The terminal device sending the second message to the network device may be the terminal device sending the second message to the core network device through an access network device. The terminal device receiving the first message sent by the network device may be the terminal device receiving the first message sent by the core network device through the access network device. Here, the access network device may refer to the access network device of the current cell where the terminal device is located.

The second message may be a second non-access stratum (NAS) message, and the first message may be a first NAS message. In a preferred example, the second message may be a registration request message; correspondingly, the first message may be a registration accept message. It should also be noted that if the first message is a registration accept message, after receiving the registration accept message, the terminal device may further send a registration complete message to the network device. This embodiment does not limit the authentication and information interaction processes performed by the core network device within the core network.

In some possible implementations, the first message carries the multiple registration areas of the terminal device.

Before the network device sends the first message to the terminal device, the method further includes: the network device determines the area parameters of the terminal device based on the identification information of the terminal device, and the network device determines the multiple registration areas of the terminal device based on the area parameters of the terminal device; or, the network device determines the multiple registration areas of the terminal device based on the area parameters of the terminal device. It should be noted that the processing of the network device determining the area parameters of the terminal device based on the identification information of the terminal device and the network device determining the multiple registration areas of the terminal device based on the area parameters of the terminal device may be performed after the network device receives the second message sent by the terminal device and before the network device sends the first message to the terminal device.

Specifically, if the second message only carries the identification information of the terminal device, the network device determines the area parameters of the terminal device based on the identification information of the terminal device and determines the multiple registration areas of the terminal device based on the area parameters of the terminal device.

If the second message only carries the area parameters of the terminal device, the network device determines the multiple registration areas of the terminal device based on the area parameters of the terminal device.

If the second message carries both the identification information of the terminal device and the area parameters of the terminal device, the network device may determine, based on actual conditions, whether to perform the processing of determining the area parameters of the terminal device based on the identification information of the terminal device and then determining the multiple registration areas of the terminal device based on the area parameters, or to perform the processing of directly determining the multiple registration areas of the terminal device based on the area parameters. This embodiment does not limit how the network device determines which processing to perform.

Optionally, the network device determining the area parameters of the terminal device based on the identification information of the terminal device includes: the network device obtains the area parameters of the terminal device from subscription data based on the identification information of the terminal device.

Here, the subscription data may be stored in the UDM; the subscription data may include area parameters of each of one or more devices. It should be understood that the subscription data may also include other types of parameters of each device, and this embodiment does not exhaustively list all possible parameters included in the subscription data. The network device obtaining the area parameters of the terminal device from the subscription data based on the identification information of the terminal device may specifically be: the network device obtains the area parameters of the terminal device from the subscription data stored in the UDM based on the identification information of the terminal device. Further, the area parameters of the terminal device stored in the subscription data in the UDM may be preconfigured in the UDM or sent to the UDM by an application server.

Optionally, before the network device determines the area parameters of the terminal device based on the identification information of the terminal device, the method further includes: the network device receives the area parameters of each of one or more devices sent by the application server. The network device determining the area parameters of the terminal device based on the identification information of the terminal device includes: the network device determines the area parameters of the terminal device from the area parameters of each of the one or more devices based on the identification information of the terminal device. Here, the one or more devices may include the terminal device.

The application server may be an AF, and further, the AF may be the AF corresponding to the terminal device.

The timing of the application server sending the area parameters of each of the one or more devices to the network device is not limited in this embodiment. For example, the application server may send the area parameters of a device to the network device when the area parameters of the device are newly added on the application server side; or, the application server may send the area parameters of each newly added device in the current period to the network device after obtaining or storing the area parameters of multiple newly added devices in the current period.

In this scenario, the network device may receive and store the area parameters of each device sent by the application server. Then, after receiving the second message sent by the terminal device and before sending the first message to the terminal device, the network device selects the area parameters of the terminal device from the stored area parameters of each device based on the identification of the terminal device.

The area parameters of the terminal device include: identifier of each of multiple sub-areas where the terminal device can trigger registration updates. Each of the multiple registration areas of the terminal device includes one or more multiple sub-areas, and different registration areas include different sub-areas. Here, any one of the multiple sub-areas may be a cell.

The identifier of each sub-area includes one of the following: a tracking area identity (TAI) of the sub-area or a tracking area code (TAC) of the sub-area.

Optionally, the network device determining the multiple registration areas of the terminal device based on the area parameters of the terminal device may specifically include: the network device treats(determines) each of the multiple sub-areas included in the area parameters of the terminal device as a registration area, thereby obtaining the multiple registration areas of the terminal device. This case is particularly applicable to scenarios where different sub-areas among the multiple sub-areas do not overlap. The definition of non-overlapping between different sub-areas is the same as the definition of non-overlapping between different registration areas mentioned earlier and will not be repeated here.

Referring to FIG. 7 as an example, assume that the area parameters of the terminal device include identifiers of four sub-areas, marked as sub-area 1, sub-area 2, sub-area 3, and sub-area 4. The network device may treat a single sub-area as a registration area. For example, sub-area 1 corresponds to registration area 1 in FIG. 7, sub-area 2 corresponds to registration area 2 in FIG. 7, and so on.

Optionally, the network device determining the multiple registration areas of the terminal device based on the area parameters of the terminal device may specifically include: the network device divides the multiple sub-areas included in the area parameters of the terminal device to obtain the multiple registration areas of the terminal device, where each of the multiple registration areas includes one or more sub-areas, and different registration areas include different sub-areas.

In this case, the processing of the network device dividing the multiple sub-areas included in the area parameters of the terminal device to obtain the multiple registration areas of the terminal device may be: the network device divides the multiple sub-areas included in the area parameters of the terminal device based on geographical locations to obtain the multiple registration areas of the terminal device. For example, if two or more sub-areas among the multiple sub-areas are geographically close to each other, these two sub-areas may be grouped into the same registration area. Here, two or more sub-areas being geographically close to each other may mean that the distance between the nearest edges of the two or more sub-areas is less than a preset distance threshold. The preset threshold may be set based on actual conditions, such as 10 meters, 100 meters, or larger or smaller values. Alternatively, if two or more sub-areas among the multiple sub-areas geographically overlap, these two sub-areas may be grouped into the same registration area. Additionally, there may be a sub-area whose distance to any other sub-area is greater than the distance threshold and does not overlap with any other sub-area. In this case, the sub-area may be treated as a separate registration area. It should be understood that the above are only examples, and other processing methods may also be used to divide the multiple sub-areas into the multiple registration areas, as long as the resulting multiple registration areas do not overlap with each other, which falls within the protection scope of this embodiment.

Assume that the area parameters of the terminal device include identifiers of eight sub-areas, marked as sub-area 1, sub-area 2, up to sub-area 8. The network device may treat a single sub-area as a registration area or group any two or more sub-areas into a registration area. Still referring to FIG. 7 as an example, sub-area 1 may be treated as registration area 1 in FIG. 7, sub-areas 2, 4, and 6 may be grouped into registration area 2 in FIG. 7, sub-areas 3 and 5 may be grouped into registration area 3 in FIG. 7, and sub-areas 7 and 8 may be grouped into registration area 4 in FIG. 7.

The first message carrying the multiple registration areas of the terminal device may specifically mean that the first message carries information related to each of the multiple registration areas of the terminal device. The information related to each registration area may include identifier of each of one or more sub-areas included in the registration area. The identifiers of the one or more sub-areas included in the registration area may be in the form of a list. In addition, the information related to each registration area may also include one or more of the following: an identifier of the registration area, the ID of the registration area, etc. It should be understood that in some possible examples, each registration area may also be referred to as a sub-registration area. In some possible examples, the first message may carry registration area list information, where the list information includes multiple sub-registration areas. The definition of each sub-registration area is the same as that of each registration area mentioned earlier and will not be repeated here.

After the terminal device receives the first message sent by the network device, the method further includes: when the terminal device moves from a first area to a second area and the second area is located in one of the multiple registration areas, the terminal device determines that the terminal device is located in the first registration update area, where the first area is different from the second area; the terminal device sends a third message to the network device, where the third message is used to trigger the registration update process.

The second area being located in one of the multiple registration areas may mean that the second area is located within any one of the multiple registration areas, or that the second area is any one of the multiple registration areas.

The terminal device determining that it is located in the first registration update area when moving from the first area to the second area and the second area being located in one of the multiple registration areas may include: the terminal device determines whether it has moved from the first area to the second area; if the terminal device determines that it has moved from the first area to the second area, the terminal device determines whether the second area is located in any one of the multiple registration areas; if the terminal device determines that the second area is located in any one of the multiple registration areas, the terminal device determines that it is located in the first registration update area.

The terminal device determining whether it has moved from the first area to the second area may include: the terminal device continuously detects whether it has received a broadcast message from the current cell during movement; if the broadcast message from the current cell is received, the terminal device obtains the identifier of the current cell from the broadcast message; the terminal device determines whether the identifier of the current cell is the same as the identifier of the cell corresponding to the first area; if they are different, the terminal device treats the current cell as the second area and determines that it has moved from the first area to the second area. Additionally, if the identifier of the current cell is the same as the identifier of the cell corresponding to the first area, the terminal device determines that it is still located in the first area. Here, the first area may be an area of the last cell where the terminal device passed through or stayed before entering the second area. The identifier of the current cell may also be the TAI and/or TAC of the cell.

After the terminal device determines whether it has moved from the first area to the second area, the method may further include: if the terminal device determines that it is still located in the first area, the terminal device continues to determine whether it has moved from the first area to the second area.

The terminal device determining whether the second area is located in any one of the multiple registration areas may include: the terminal device compares the identifier of the cell corresponding to the second area with the identifier of each of the sub-areas included in each of the multiple registration areas; if the identifier of any sub-area in any registration area among the multiple registration areas is the same as the identifier of the cell corresponding to the second area, the terminal device determines that the second area is located in any one of the multiple registration areas.

After determining whether the second area is located in any one of the multiple registration areas, the method may further include: if the terminal device determines that the second area is not located in any of the multiple registration areas, the terminal device treats the second area as a new first area and continues to determine whether it has moved from the new first area to a new second area.

Optionally, if any registration area may include multiple sub-areas, the terminal device determining that it is located in the first registration update area after determining that the second area is located in any one of the multiple registration areas may further include: if the terminal device determines that the second area is located in any one of the multiple registration areas, the terminal device determines whether the second area and the first area are located in the same registration area; if they are not, the terminal device determines that it is located in the first registration update area. Additionally, if the second area and the first area are located in the same registration area, no processing is performed, and the terminal device treats the second area as a new first area and continues to determine whether it has moved from the new first area to a new second area.

The terminal device sending the third message to the network device may include: the terminal device sends the third message to the core network device through the access network device.

The third message may be a third NAS message. Specifically, the third message may be a service request message; or, the third message may be a request message for a mobility management update process, which may also be referred to as a mobility registration update process or a mobility update procedure. The possible names are not exhaustively listed here. The third message may carry the identification information of the terminal device. In some possible examples, in addition to the identification information of the terminal device, the third message may also carry the identifier of the current cell where the terminal device is located and/or information related to the first registration update area. In other examples, the third message may only carry the identification information of the terminal device and/or information related to the first registration update area. When the access network device forwards the third message, it may add the identifier of the current cell where the terminal device is located to the third message. It should be understood that the third message may also carry other information, as long as it carries at least part of the information required to trigger the registration update process. This embodiment does not limit the information carried in the third message.

Additionally, after the terminal device sends the third message to the network device, the method may further include: the terminal device treats the first registration update area as a new first area and continues to determine whether the terminal device has moved from the new first area to a new second area.

The registration update process may also be referred to as a mobility update process, a mobility registration update process, or a mobility management update process in some possible examples. The possible names are not exhaustively listed here. The function of the registration update process may be to enable the network device to know the location of the terminal device. In this embodiment, the location of the terminal device may specifically be the first registration update area where the terminal device is located.

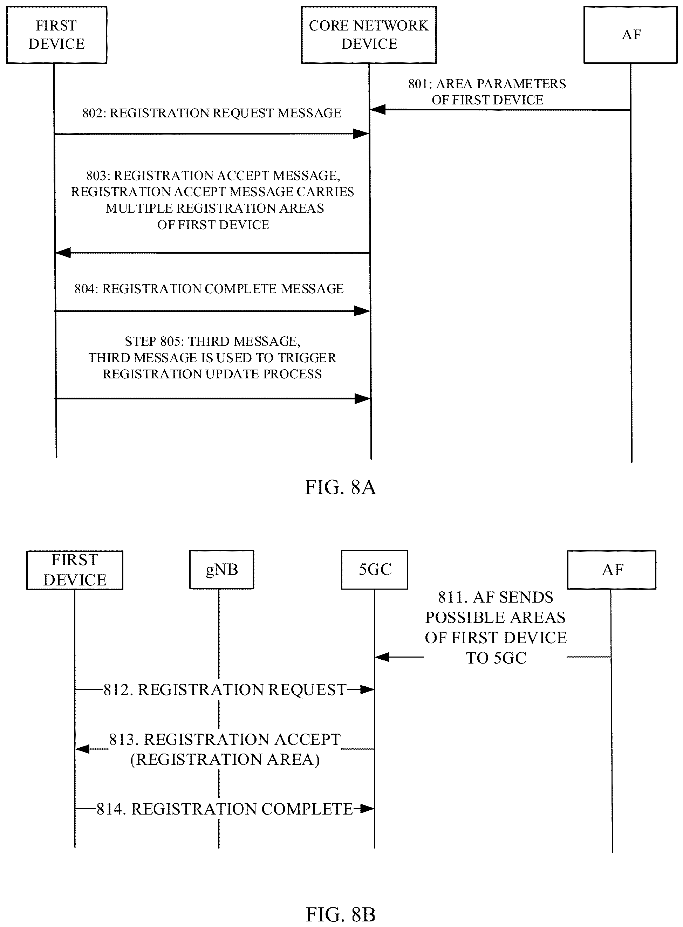

Below, referring to FIG. 8A, with the terminal device as a first device, the network device as a core network device, the application server as an AF, the second message is a registration request message, and the first message is a registration accept message, an example of the communication method provided in the above implementation is described, including:

Step 801: the AF sends the area parameters of the first device to the core network device. The area parameters may include identifier of each of multiple sub-areas where the first device can trigger registration update. In this step, the AF may send the area parameters of each of one or more devices to the core network device, and the first device may be any one of the one or more devices.

Step 802: the first device sends a registration request message to the core network device. The registration request message carries the identification information of the first device and is used to trigger the registration process.

Step 803: the core network device sends a registration accept message to the first device. The registration accept message carries the multiple registration areas of the first device.

Here, the method for the core network device to determine the multiple registration areas of the first device may be: determining the area parameters of the first device from the area parameters of each of the one or more devices based on the identification information of the first device, and then determining the multiple registration areas of the first device based on the area parameters of the first device. The specific processing is the same as that in the foregoing embodiment and will not be repeated here.

In another possible example, the method for the core network device to determine the multiple registration areas of the first device may be: obtaining the area parameters of the first device from subscription data based on the identification information of the first device, and then determining the multiple registration areas of the first device based on the area parameters of the first device. If this example is adopted, step 801 may not be performed. The specific processing is the same as that in the foregoing embodiment and will not be repeated here.

Step 804: the first device sends a registration complete message to the core network device.

Step 805: when the first device moves from a first area to a second area and the second area is located in one of the multiple registration areas, the first device determines that the terminal device is located in the first registration update area and sends a third message to the core network device. The third message is used to trigger the registration update process. Here, the first area is different from the second area.

The specific processing of step 805 is the same as that in the foregoing embodiment and will not be repeated here. Additionally, each time the first device moves into any one of the multiple registration areas from another area, it performs the processing of step 805. That is, when the first device is located in any registration area, the first device determines that it is located in the first registration update area or determines that it is located in the current first registration update area. This will not be repeated here.

It should also be understood that the messages exchanged between the first device and the core network device, such as the registration request message, registration accept message, and registration complete message, may all be forwarded through the RAN. For simplicity, this is not illustrated in FIG. 8, but FIG. 8 does not mean that the first device and the core network device do not forward messages through the RAN in actual processing.

By adopting the above example, the first device only needs to trigger the registration update process when it enters any one of the multiple registration areas. When it is located in areas other than the registration areas, it does not need to initiate the registration update process, thereby saving signaling on the first device side.

Below, referring to FIG. 8B, with the terminal device as a first device, the network device represented as a 5GC, the application server as an AF, the second message is a registration request, the first message is a registration accept, and the registration areas referred to as sub-registration areas, an example of the communication method provided in the above implementation is described, including:

Step 811: the AF sends possible areas of the first device to the 5GC (which may be a core network element such as AMF, SMF, NEF, or a new NF-AIoT-NF specifically established for AIoT). The possible areas of the first device are the area parameters of the first device (including possible registration areas of the first device, where the registration areas include multiple TAI lists). It should be understood that in this step, the AF may send the area parameters of each of one or more devices to the 5GC, and the first device may be any one of the one or more devices.

Step 812: the first device initiates a registration process to the 5GC (e.g., the core network element AMF). The message (i.e., the registration request illustrated in FIG. 8B) carries the identification information of the first device.

Step 813: the 5GC returns a registration accept message to the first device. The message carries registration areas, which may be generated based on the area parameters in step 811 or obtained by the AMF from subscription data. The registration areas may specifically refer to registration area information or registration area list information, where the list information may include sub-registration area 1, sub-registration area 2, sub-registration area 3, etc.

Step 814: the first device returns a registration complete message to the core network element.

The first device needs to initiate a mobility registration update process only when the first device enters sub-registration areas 1, 2, 3, or 4. However, during the movement from sub-registration area 1 to sub-registration area 2, the first device does not need to initiate a registration update process, thereby saving signaling.

This example omits processes unrelated to the disclosure, such as the process between the AMF and UDM and the authentication process.

When the first device moves into sub-registration area 2, the first device may also send a service request, allowing the network side to know that the first device has entered sub-registration area 2. Similarly, when the first device enters sub-registration areas 3 or 4, the same process occurs.

In some possible implementations, the first message carries the first registration update area. The first registration update area specifically refers to the first registration update area of the terminal device.

Before the network device sends the first message to the terminal device, the method further includes: the network device determines the area parameters of the terminal device based on the identification information of the terminal device, and the network device determines the multiple registration areas of the terminal device based on the area parameters of the terminal device; or, the network device determines the multiple registration areas of the terminal device based on the area parameters of the terminal device. The processing of the network device determining the multiple registration areas of the terminal device is the same as that in the foregoing embodiment and will not be repeated here. The descriptions of the area parameters of the terminal device, the multiple registration areas of the terminal device, and the sub-areas are also the same as those in the foregoing embodiment and will not be repeated here.

Unlike the foregoing implementation, after the network device determines the multiple registration areas of the terminal device based on the area parameters of the terminal device, the method further includes: the network device determines a target registration area of the terminal device from the multiple registration areas of the terminal device based on the area where the terminal device is located; the network device determines the first registration update area of the terminal device based on the target registration area.

If the second message is a registration request message and the first message is a registration accept message, the processing from the network device determining the area parameters of the terminal device based on the identification information of the terminal device to the network device determining the first registration update area corresponding to the target registration area may be performed after the network device receives the second message sent by the terminal device and before the network device sends the first message to the terminal device.

The network device determining the target registration area of the terminal device from the multiple registration areas of the terminal device based on the area where the terminal device is located may include one of the following: if the area where the terminal device is located is within a first registration area of the multiple registration areas of the terminal device, the network device treats the first registration area as the target registration area of the terminal device; if the area where the terminal device is located is not within any of the multiple registration areas of the terminal device, the network device selects the registration area closest to the area where the terminal device is located from the multiple registration areas as the target registration area of the terminal device.

Here, the area where the terminal device is located may refer to the current cell where the terminal device is located, and the current cell may be represented by the identifier of the cell. The method for the network device to obtain the area where the terminal device is located may be that the network device obtains the area where the terminal device is located through an access network device, where the access network device is the access network device of the cell where the terminal device is located. For example, the network device is a core network device, the network device obtaining the area where the terminal device is located may be that the core network device receives the area where the terminal device is located from the access network device when receiving the second message sent by the terminal device through the access network device. The area where the terminal device is located may be carried in the second message, i.e., the access network device may add the area where the terminal device is located to the second message, or the access network device may send the area where the terminal device is located to the core network device through other signaling while forwarding the second message. This embodiment does not limit the method.

The network device treating the first registration area as the target registration area of the terminal device if the area where the terminal device is located is within the first registration area of the multiple registration areas of the terminal device may include: the network device determines whether the area where the terminal device is located is within any of the multiple registration areas of the terminal device; if the area where the terminal device is located is within the first registration area of the multiple registration areas, the network device directly treats the first registration area as the target registration area of the terminal device.

If there is only one registration area closest to the area where the terminal device is located, the network device may directly treat this registration area as the target registration area of the terminal device; if there are multiple registration areas closest to the area where the terminal device is located, the network device may select the registration area closest to the area where the terminal device is located in the moving direction of the terminal device as the target registration area of the terminal device based on the moving route of the terminal device.

The network device determining the first registration update area of the terminal device based on the target registration area may include one of the following: the network device determines the registration area corresponding to the target registration area based on the moving route of the terminal device and treats the registration area corresponding to the target registration area as the first registration update area of the terminal device; the network device determines the first registration update area of the terminal device based on the distance between each of the multiple registration areas and the target registration area.

The network device determining the registration area corresponding to the target registration area based on the moving route of the terminal device and treating the registration area corresponding to the target registration area as the first registration update area of the terminal device may refer to: the network device determines the order in which the terminal device passes through the multiple registration areas based on the moving route of the terminal device; based on the order in which the terminal device passes through the multiple registration areas, the network device determines a registration area that is after the target registration area and adjacent to the target registration area in terms of the order as the registration area corresponding to the target registration area, and treats the registration area corresponding to the target registration area as the first registration update area of the terminal device.

The moving route of the terminal device may be pre-obtained or pre-stored by the network device. This embodiment does not limit the method for the network device to obtain the moving route of the terminal device. The moving route of the terminal device may include each area that the terminal device is expected to pass through and the order in which the terminal device is expected to pass through each area. The network device determining the order in which the terminal device passes through the multiple registration areas based on the moving route of the terminal device may include: determining the order in which the terminal device passes through each of the multiple registration areas based on the order in which the terminal device is expected to pass through each area in the moving route.

The network device determining the first registration update area of the terminal device based on the distance between each of the multiple registration areas and the target registration area may include: the terminal device calculates the distance between each of the multiple registration areas and the target registration area and selects the registration area closest to the target registration area with a non-zero distance as the first registration update area of the terminal device. It should be understood that there may be one or more registration areas closest to the target registration area with a non-zero distance. If there is only one such registration area, the network device directly treats this registration area as the first registration update area; if there are multiple such registration areas, the network device may treat all of them as the first registration update area.

The first message carrying the first registration update area may specifically mean that the first message carries information related to the first registration update area of the terminal device. The information related to the first registration update area may include the identifier of each of one or more sub-areas included in the first registration update area. Additionally, the information related to the first registration update area may also include one or more of the following: an identifier of the first registration update area, an ID of the first registration update area, etc.

After the terminal device receives the first message sent by the network device, the method further includes: when the terminal device moves from a third area to a fourth area and the fourth area is located within the first registration update area, the terminal device sends a third message to the network device, where the third message is used to trigger the registration update process. Here, the third area is different from the fourth area.

The terminal device sending the third message to the network device when moving from the third area to the fourth area and the fourth area being located within the first registration update area may include: the terminal device determines whether it has moved from the third area to the fourth area; if the terminal device determines that it has moved from the third area to the fourth area, it determines whether the fourth area is located within the first registration update area; if the terminal device determines that the fourth area is located within the first registration update area, it sends the third message to the network device. Here, the terminal device determining whether it has moved from the third area to the fourth area is similar to the terminal device determining whether it has moved from the first area to the second area described earlier and will not be repeated here.

Additionally, after the terminal device determines whether it has moved from the third area to the fourth area, the method may further include: if the terminal device determines that it is still located in the third area, it continues to determine whether to move from the third area to the fourth area.

The terminal device determining whether the fourth area is located within the first registration update area may include: the terminal device compares the identifier of the cell corresponding to the fourth area with the identifier of each of the sub-areas included in the first registration update area; if the identifier of any sub-area in the first registration update area is the same as the identifier of the cell corresponding to the fourth area, the terminal device determines that the fourth area is located within the first registration update area.

After determining whether the fourth area is located within the first registration update area, the method may further include: if the terminal device determines that the fourth area is not located within the first registration update area, the terminal device treats the fourth area as a new third area and continues to determine whether it has moved from the new third area to a new fourth area.

It should also be noted that if the first registration update area includes multiple sub-areas, the terminal device sending the third message to the network device after determining that the fourth area is located within the first registration update area may further include: if the terminal device determines that the fourth area is located within the first registration update area, it determines whether the third area and the fourth area are both located within the first registration update area; if they are not, the terminal device sends the third message to the network device. Additionally, if the third area and the fourth area are both located within the first registration update area, no processing is performed, and the terminal device treats the fourth area as a new third area and continues to determine whether the terminal device has moved from the new third area to a new fourth area.

The terminal device sending the third message to the network device may include: the terminal device sends the third message to the core network device through the access network device. The specific description of the third message is the same as that in the foregoing embodiment and will not be repeated here.

After the network device sends the first message to the terminal device, the method further includes: the network device receives the third message sent by the terminal device in the first registration update area, where the third message is used to trigger the registration update process; the network device determines a second registration update area of the terminal device based on the first registration update area, where the second registration update area is different from the first registration update area; the network device sends a fourth message to the terminal device, where the fourth message carries the second registration update area of the terminal device. Correspondingly, after the terminal device sends the third message to the network device, the method further includes: the terminal device receives the fourth message sent by the network device, where the fourth message carries the second registration update area of the terminal device, and the second registration update area is different from the first registration update area. The fourth message may be a fourth NAS message.

The network device determining the second registration update area of the terminal device based on the first registration update area may include one of the following: the network device determines the registration area corresponding to the first registration update area based on the moving route of the terminal device and treats the registration area corresponding to the first registration update area as the second registration update area of the terminal device; the network device determines the second registration update area of the terminal device based on the distance between each of the multiple registration areas and the first registration update area.

The network device determining the registration area corresponding to the first registration update area based on the moving route of the terminal device and treating the registration area corresponding to the first registration update area as the second registration update area of the terminal device may refer to: the network device determines the order in which the terminal device passes through the multiple registration areas based on the moving route of the terminal device; based on the order in which the terminal device passes through the multiple registration areas, the network device determines a registration area that is after the first registration update area and adjacent to the first registration update area in terms of the order as the registration area corresponding to the first registration update area, and treats the registration area corresponding to the first registration update area as the second registration update area of the terminal device.

The network device determining the second registration update area of the terminal device based on the distance between each of the multiple registration areas and the first registration update area may include: the terminal device calculates the distance between each of the multiple registration areas and the first registration update area and selects the registration area closest to the first registration update area with a non-zero distance as the second registration update area of the terminal device.

It should also be noted that after sending the third message, the terminal device may treat the first registration update area as a new third area and may also save the first registration update area as the previous registration update area or a historical registration update area. After receiving the fourth message, the terminal device treats the second registration update area carried in the fourth message as the new first registration update area and continues to determine whether the terminal device has moved from the new third area to a new fourth area and whether the new fourth area is located within the new first registration update area. The terminal device repeats the above processing of sending a new third message and receiving a new fourth message, which will not be repeated here.

In this implementation, the first message may also carry the target registration area, which is different from the first registration update area. The method for the network device to determine the target registration area of the terminal device has been described in detail in the foregoing embodiment and will not be repeated here. The network device may page the terminal device when the terminal device is located in the target registration area.

When the terminal device detects that it is located in the target registration area for the first time after receiving the first message, it may not initiate the registration update process, but the terminal device may save the target registration area. As the terminal device enters the first registration update area and performs the registration update process, if the terminal device moves into the target registration area again from another area, it may trigger the registration update process.

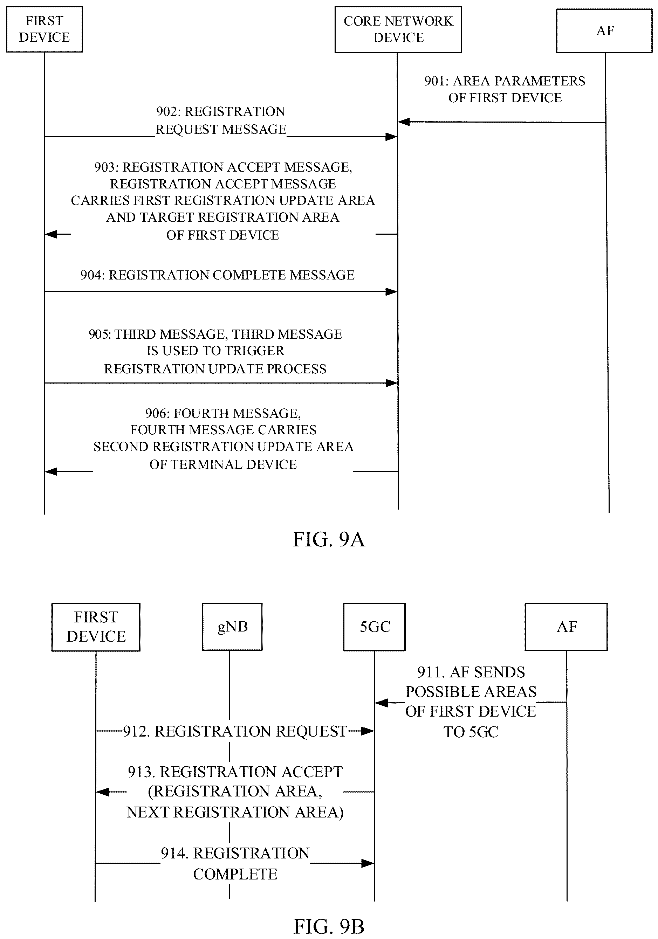

Below, referring to FIG. 9A, with the terminal device as a first device, the network device as a core network device, the application server as an AF, the second message is a registration request message, and the first message is a registration accept message, an example of the communication method provided in the above implementation is described, which includes the following.

Step 901: the AF sends the area parameters of the first device to the core network device.

Step 902: the first device sends a registration request message to the core network device. The registration request message carries the identification information of the first device and is used to trigger the registration process.

The detailed descriptions of steps 901 and 902 are the same as those of steps 801 and 802 in FIG. 8A and will not be repeated here.

Step 903: the core network device sends a registration accept message to the first device. The registration accept message carries the first registration update area and the target registration area of the first device.

Here, the method for the core network device to determine the first registration update area and the target registration area of the first device is the same as that in the foregoing example and will not be repeated here.

Step 904: the first device sends a registration complete message to the core network device.

Step 905: when the first device moves from a third area to a fourth area and the fourth area is located within the first registration update area, the first device sends a third message to the core network device. The third message is used to trigger the registration update process. Here, the first area is different from the second area.

The specific processing of step 905 is the same as that in the foregoing embodiment and will not be repeated here.

Step 906: the core network device sends a fourth message to the first device. The fourth message carries the second registration update area of the terminal device.

The core network device may determine the second registration update area of the first device based on the first registration update area, where the second registration update area is different from the first registration update area. The method for the core network device to determine the second registration update area is the same as that in the foregoing embodiment and will not be repeated here.

After completing step 906, the first device may save the first registration update area as the previous registration update area and save the second registration update area as the new first registration update area. Additionally, the first device may treat the fourth area as a new third area and then determine whether the first device has moved from the new third area to a new fourth area and whether the new fourth area is located within the new first registration update area. The first device repeats the processing of steps 905 and 906, which will not be repeated here.

It should also be understood that the messages exchanged between the first device and the core network device, such as the registration request message, registration accept message, registration complete message, third message, and fourth message, may all be forwarded through the RAN. For simplicity, this is not illustrated in FIG. 9, but FIG. 9 does not mean that the first device and the core network device do not forward messages through the RAN in actual processing.

By adopting the above example, the first device only needs to trigger the registration update process when it enters the first registration update area. When the first device is located in other areas, it does not need to initiate the registration update process, thereby saving signaling on the first device side.

Below, referring to FIG. 9B, with the terminal device as a first device, the network device represented as a 5GC, the application server as an AF, the second message is a registration request, and the first message specifically is a registration accept, an example of the communication method provided in the above implementation is described, which includes the following.

Step 911: the AF sends possible areas of the first device to the 5GC (which may be a core network element such as AMF, SMF, NEF, or a new NF-AIoT-NF specifically established for AIoT). The possible areas of the first device are the area parameters of the first device (including possible registration areas of the first device, where the registration areas include multiple TAI lists). It should be understood that in this step, the AF may send the area parameters of each of one or more devices to the 5GC, and the first device may be any one of the one or more devices.

Step 912: the first device initiates a registration process to the 5GC (e.g., the core network element AMF). The message carries the identification information of the first device.

Step 913: the 5GC returns a registration accept message to the first device. The message carries registration area information (i.e., the target registration area in the foregoing embodiment), which may be generated based on the area parameters in step 911 or obtained by the AMF from subscription data. The registration area includes multiple TACs, such as TAC1. The message also carries the next registration area (i.e., the first registration update area in the foregoing embodiment), which includes TAC2.

Step 914: the first device returns a registration complete message to the core network element.

For example, if the registration area is registration area 1 and the next registration area is registration area 2, the first device only needs to initiate a mobility registration update process when it enters registration area 2. During the movement from registration area 1 to registration area 2, the first device does not need to initiate a registration update process, thereby saving signaling.

It can be seen that by adopting the above solution, the network device sends a first message to the terminal device, and the first message can be used by the terminal device to determine whether the terminal device is located in a first registration update area that triggers the registration update process. The first registration update area is one of multiple registration areas of the terminal device, and the multiple registration areas are candidate areas where the terminal device can trigger the registration update process. In this way, the terminal device only needs to perform the registration update process in certain candidate areas, avoiding the problem of excessive power consumption caused by performing the registration update process whenever the terminal device moves out of any registration area in the related art. This ensures that the terminal device performs the registration update process while reducing the frequency of such processes, thereby lowering the energy consumption of the terminal device.

Further, the above solution is applicable to scenarios where the terminal device is a zero-power terminal, especially scenarios where the zero-power terminal may move. In such scenarios, the zero-power terminal only needs to perform the mobility management update process (i.e., the registration update process) in certain areas to allow the network side to know the approximate location of the zero-power terminal. For example, in a logistics scenario, if the zero-power terminal is fixed or placed on a transported item, the zero-power terminal only needs to trigger the registration update process at certain large logistics transfer stations and does not need to trigger any registration update process in other areas. This ensures that the terminal device performs the registration update process while reducing the frequency of such processes, thereby lowering the energy consumption of the terminal device.

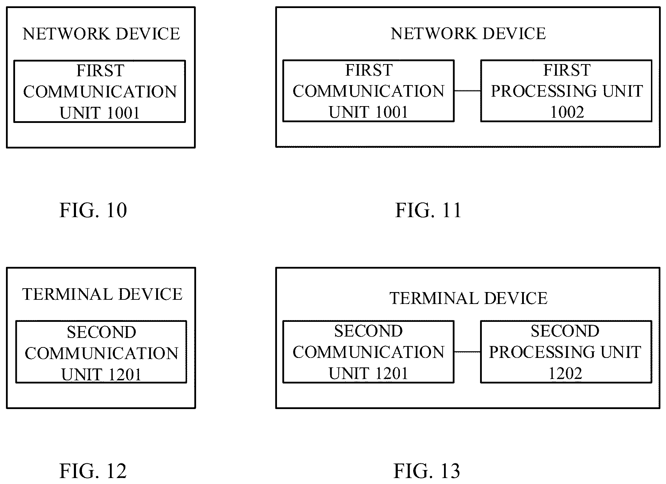

FIG. 10 is a schematic structural diagram of a network device according to an embodiment of the disclosure. The network device includes a first communication unit 1001, which is configured to send a first message to a terminal device, where the first message is used by the terminal device to determine whether the terminal device is located in a first registration update area. The first registration update area is an area where the terminal device triggers a registration update process, and the first registration update area is one of multiple registration areas of the terminal device. Each of the multiple registration areas is a candidate area where the terminal device can trigger the registration update process.

The first communication unit is configured to receive a second message sent by the terminal device before sending the first message to the terminal device. The second message is used to trigger a registration process and carries identification information of the terminal device and/or area parameters of the terminal device.

On the basis of FIG. 10, as illustrated in FIG. 11, the network device further includes a first processing unit 1002, which is configured to determine the area parameters of the terminal device based on the identification information of the terminal device and determine the multiple registration areas of the terminal device based on the area parameters of the terminal device; or, determine the multiple registration areas of the terminal device based on the area parameters of the terminal device.

The first message carries the multiple registration areas of the terminal device.

After determining the multiple registration areas of the terminal device based on the area parameters of the terminal device, the first processing unit is configured to determine a target registration area of the terminal device from the multiple registration areas of the terminal device based on the area where the terminal device is located; determine the first registration update area of the terminal device based on the target registration area.

The first processing unit is configured to perform one of the following: determine the registration area corresponding to the target registration area based on a moving route of the terminal device and treat the registration area corresponding to the target registration area as the first registration update area of the terminal device; determine the first registration update area of the terminal device based on the distance between each of the multiple registration areas and the target registration area.

The first message carries the first registration update area.

The first message further carries a target registration area of the terminal device.

After sending the first message to the terminal device, the first communication unit is configured to receive a third message sent by the terminal device in the first registration update area, where the third message is used to trigger the registration update process; send a fourth message to the terminal device, where the fourth message carries the second registration update area of the terminal device.

The first processing unit is configured to determine the second registration update area of the terminal device based on the first registration update area, where the second registration update area is different from the first registration update area.

The area parameters of the terminal device include: identifier of each of multiple sub-areas where the terminal device can trigger registration updates. Each of the multiple registration areas of the terminal device includes one or more of the multiple sub-areas, and different registration areas include different sub-areas.

The identifier of each sub-area includes one of the following: a tracking area identity (TAI) of the sub-area or a tracking area code (TAC) of the sub-area.

The first processing unit is configured to obtain the area parameters of the terminal device from subscription data based on the identification information of the terminal device.

Before determining the area parameters of the terminal device based on the identification information of the terminal device, the first processing unit is configured to receive the area parameters of each of one or more devices sent by the application server through the first communication unit; determine the area parameters of the terminal device from the area parameters of each of the one or more devices based on the identification information of the terminal device.

The network device is a core network device; the terminal device is a zero-power device.

The network device in the embodiments of the disclosure can implement the corresponding functions of the network device in the foregoing communication method embodiments. The processes, functions, implementations, and beneficial effects corresponding to each module (sub-module, unit, or component) in the network device can be referred to the corresponding descriptions in the foregoing method embodiments and will not be repeated here. It should be noted that the functions described for each module (sub-module, unit, or component) in the network device in the embodiments of the disclosure can be implemented by different modules (sub-modules, units, or components) or by the same module (sub-module, unit, or component).

FIG. 12 is a schematic structural diagram of a terminal device according to an embodiment of the disclosure. The terminal device includes a second communication unit 1201, which is configured to receive a first message sent by a network device, where the first message is used by the terminal device to determine whether the terminal device is located in a first registration update area. The first registration update area is an area where the terminal device triggers a registration update process, and the first registration update area is one of multiple registration areas of the terminal device. Each of the multiple registration areas is a candidate area where the terminal device can trigger the registration update process.

The second communication unit is configured to send a second message to the network device before receiving the first message sent by the network device. The second message is used to trigger a registration process and carries identification information of the terminal device and/or area parameters of the terminal device.

The first message carries the multiple registration areas of the terminal device.

On the basis of FIG. 12, as illustrated in FIG. 13, the network device further includes a second processing unit 1202, which is configured to determine that the terminal device is located in the first registration update area when the terminal device moves from a first area to a second area and the second area is located in one of the multiple registration areas, where the first area is different from the second area. The second communication unit is configured to send a third message to the network device after receiving the first message sent by the network device. The third message is used to trigger the registration update process.

The first message carries the first registration update area.

The first message further carries a target registration area of the terminal device, where the target registration area is different from the first registration update area.

After receiving the first message sent by the network device, the second communication unit is configured to send a third message to the network device when the terminal device moves from a third area to a fourth area and the fourth area is located within the first registration update area. The third message is used to trigger the registration update process. Here, the third area is different from the fourth area.

After sending the third message to the network device, the second communication unit is configured to receive a fourth message sent by the network device. The fourth message carries the second registration update area of the terminal device, where the second registration update area is different from the first registration update area.

Each of the multiple registration areas of the terminal device includes one or more sub-areas, and different registration areas includes different sub-areas.

The identifier of each sub-area includes one of the following: a tracking area identity (TAI) of the sub-area or a tracking area code (TAC) of the sub-area.

The network device is a core network device; the terminal device is a zero-power device.

The terminal device in the embodiments of the disclosure can implement the corresponding functions of the terminal device in the foregoing communication method embodiments. The processes, functions, implementations, and beneficial effects corresponding to each module (sub-module, unit, or component) in the terminal device can be referred to the corresponding descriptions in the foregoing method embodiments and will not be repeated here. It should be noted that the functions described for each module (sub-module, unit, or component) in the terminal device in the embodiments of the disclosure can be implemented by different modules (sub-modules, units, or components) or by the same module (sub-module, unit, or component).

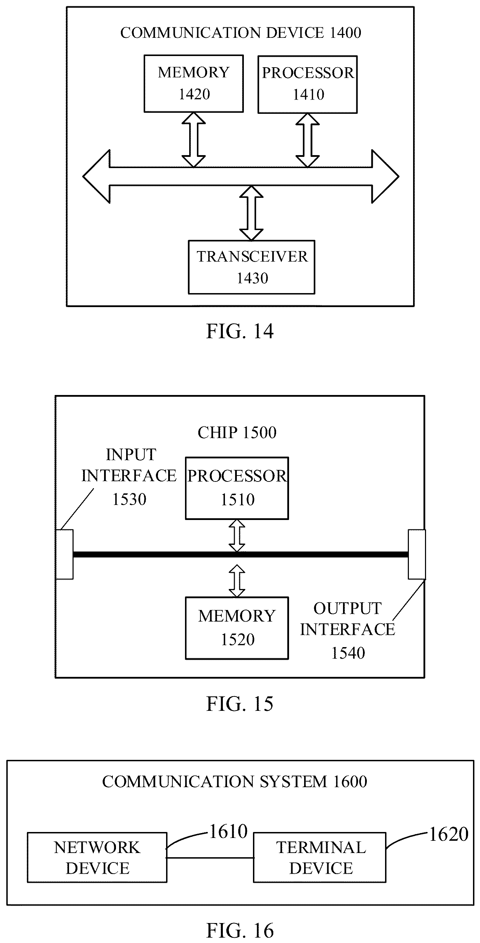

FIG. 14 is a schematic structural diagram of a communication device 1400 according to an embodiment of the disclosure. The communication device 1400 includes a processor 1410, which can invoke and execute a computer program from a memory to enable the communication device 1400 to implement the method in the embodiments of the disclosure.

In a possible implementation, the communication device 1400 may further include a memory 1420. The processor 1410 can invoke and execute a computer program from the memory 1420 to enable the communication device 1400 to implement the method in the embodiments of the disclosure.

The memory 1420 may be a separate device independent of the processor 1410 or may be integrated in the processor 1410.

In a possible implementation, the communication device 1400 may further include a transceiver 1430. The processor 1410 can control the transceiver 1430 to communicate with other devices, specifically to send information or data to other devices or receive information or data from other devices.

The transceiver 1430 may include a transmitter and a receiver. The transceiver 1430 may further include one or more antennas.

In a possible implementation, the communication device 1400 may be the network device in the embodiments of the disclosure, and the communication device 1400 may implement the corresponding processes implemented by the network device in the various methods of the embodiments of the disclosure. For brevity, details are not repeated here. In another possible implementation, the communication device 1400 may be the terminal device in the embodiments of the disclosure, and the communication device 1400 may implement the corresponding processes implemented by the terminal device in the various methods of the embodiments of the disclosure. For brevity, details are not repeated here.

FIG. 15 is a schematic structural diagram of a chip 1500 according to an embodiment of the disclosure. The chip 1500 includes a processor 1510, which can invoke and execute a computer program from a memory to implement the method in the embodiments of the disclosure.

In a possible implementation, the chip 1500 may further include a memory 1520. The processor 1510 can invoke and execute a computer program from the memory 1520 to implement the method performed by the access network device or the first core network device in the embodiments of the disclosure. The memory 1520 may be a separate device independent of the processor 1510 or may be integrated in the processor 1510.

In a possible implementation, the chip 1500 may further include an input interface 1530. The processor 1510 can control the input interface 1530 to communicate with other devices or chips, specifically to obtain information or data sent by other devices or chips. In a possible implementation, the chip 1500 may further include an output interface 1540. The processor 1510 can control the output interface 1540 to communicate with other devices or chips, specifically to output information or data to other devices or chips.

In a possible implementation, the chip can be applied to the network device in the embodiments of the disclosure, and the chip can implement the corresponding processes implemented by the network device in the various methods of the embodiments of the disclosure. For brevity, details are not repeated here. In another possible implementation, the chip can be applied to the terminal device in the embodiments of the disclosure, and the chip can implement the corresponding processes implemented by the terminal device in the various methods of the embodiments of the disclosure. For brevity, details are not repeated here.

It should be understood that the chip mentioned in the embodiments of the disclosure may also be referred to as a system-on-chip, a system chip, a chip system, or a system-on-a-chip.

The aforementioned processor may be a general-purpose processor, a digital signal processor (DSP), a field-programmable gate array (FPGA), an application-specific integrated circuit (ASIC), or other programmable logic devices, transistor logic devices, or discrete hardware components. The general-purpose processor may be a microprocessor or any conventional processor.

The aforementioned memory may be a volatile memory or a non-volatile memory, or may include both volatile and non-volatile memory. The non-volatile memory may be a read-only memory (ROM), a programmable ROM (PROM), an erasable PROM (EPROM), an electrically erasable PROM (EEPROM), or flash memory. The volatile memory may be a random access memory (RAM).

It should be understood that the aforementioned memory is exemplary but not limiting. For example, the memory in the embodiments of the disclosure may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), or direct Rambus RAM (DR RAM). That is, the memory in the embodiments of the disclosure is intended to include, but is not limited to, these and any other suitable types of memory.

FIG. 16 is a schematic block diagram of a communication system 1600 according to an embodiment of the disclosure. The communication system 1600 includes a network device 1610 and a terminal device 1620. The network device 1610 may be used to implement the corresponding functions of the network device in the foregoing method. The terminal device 1620 may be used to implement the corresponding functions of the terminal device in the foregoing method.

In the foregoing embodiments, the methods may be implemented entirely or partially by software, hardware, firmware, or any combination thereof. When implemented by software, the methods may be implemented entirely or partially in the form of a computer program product. The computer program product includes one or more computer instructions. When the computer program instructions are loaded and executed on a computer, the processes or functions according to the embodiments of the disclosure are generated in whole or in part. The computer may be a general-purpose computer, a special-purpose computer, a computer network, or other programmable devices. The computer instructions may be stored in a computer-readable storage medium or transmitted from one computer-readable storage medium to another. For example, the computer instructions may be transmitted from a website, computer, server, or data center to another website, computer, server, or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer or a data storage device such as a server or data center integrating one or more available media. The available medium may be a magnetic medium (e.g., floppy disk, hard disk, magnetic tape), an optical medium (e.g., DVD), or a semiconductor medium (e.g., solid-state drive (SSD)).

It should be understood that in the various embodiments of the disclosure, the sequence numbers of the processes do not imply the order of execution, which should be determined by their functions and internal logic, and should not limit the implementation of the embodiments of the disclosure.

Those skilled in the art can clearly understand that, for the convenience and brevity of description, the specific working processes of the systems, devices, and units described above may refer to the corresponding processes in the foregoing method embodiments and will not be repeated here.

The foregoing descriptions are only specific implementations of the disclosure, but the protection scope of the disclosure is not limited thereto. Any person skilled in the art can easily think of changes or substitutions within the technical scope disclosed in the disclosure, which should be covered by the protection scope of the disclosure. Therefore, the protection scope of the disclosure shall be subject to the protection scope of the claims.

## Claims

1. A communication method, comprising:
sending, by a network device, a first message to a terminal device, wherein the first message is used by the terminal device to determine whether the terminal device is located in a first registration update area, the first registration update area is an area where the terminal device triggers a registration update process, and the first registration update area is one of a plurality of registration areas of the terminal device, wherein each of the plurality of registration areas is a candidate area where the terminal device can trigger the registration update process.

2. The method according to claim 1, wherein before sending, by the network device, the first message to the terminal device, the method further comprises:
receiving, by the network device, a second message sent by the terminal device, wherein the second message is used to trigger a registration process, and the second message carries identification information of the terminal device and/or area parameters of the terminal device.

3. The method according to claim 2, wherein before sending, by the network device, the first message to the terminal device, the method further comprises:
determining, by the network device, the area parameters of the terminal device based on the identification information of the terminal device, and determining, by the network device, the plurality of registration areas of the terminal device based on the area parameters of the terminal device; or
determining, by the network device, the plurality of registration areas of the terminal device based on the area parameters of the terminal device.

4. The method according to any one of claims 1 to 3, wherein the first message carries the plurality of registration areas of the terminal device.

5. The method according to claim 3, wherein after determining, by the network device, the plurality of registration areas of the terminal device based on the area parameters of the terminal device, the method further comprises:
determining, by the network device, a target registration area of the terminal device from the plurality of registration areas of the terminal device based on an area where the terminal device is located; and
determining, by the network device, the first registration update area of the terminal device based on the target registration area.

6. The method according to claim 5, wherein determining, by the network device, the first registration update area of the terminal device based on the target registration area comprises one of the following:
determining, by the network device, a registration area corresponding to the target registration area based on a moving route of the terminal device, and determining the registration area corresponding to the target registration area as the first registration update area of the terminal device; and
determining, by the network device, the first registration update area of the terminal device based on a distance between each of the plurality of registration areas and the target registration area.

7. The method according to any one of claims 1 to 3, 5, or 6, wherein the first message carries the first registration update area.

8. The method according to claim 7, wherein the first message further carries the target registration area of the terminal device.

9. The method according to claim 7 or 8, wherein after sending, by the network device, the first message to the terminal device, the method further comprises:
receiving, by the network device, a third message sent by the terminal device in the first registration update area, wherein the third message is used to trigger the registration update process; and
determining, by the network device, a second registration update area of the terminal device based on the first registration update area, wherein the second registration update area is different from the first registration update area;
sending, by the network device, a fourth message to the terminal device, wherein the fourth message carries the second registration update area of the terminal device.

10. The method according to any one of claims 3 to 9, wherein the area parameters of the terminal device comprise: identifier of each of a plurality of sub-areas where the terminal device can trigger registration update;
wherein each of the plurality of registration areas of the terminal device comprises one or more of the plurality of sub-areas, and different registration areas comprise different sub-areas.

11. The method according to claim 10, wherein an identifier of each sub-area comprises one of the following: a tracking area identity (TAI) of the sub-area or a tracking area code (TAC) of the sub-area.

12. The method according to any one of claims 3 to 11, wherein determining, by the network device, the area parameters of the terminal device based on the identification information of the terminal device comprises:
obtaining, by the network device, the area parameters of the terminal device from subscription data based on the identification information of the terminal device.

13. The method according to any one of claims 3 to 11, wherein
before determining, by the network device, the area parameters of the terminal device based on the identification information of the terminal device, the method further comprises:
receiving, by the network device, area parameters of each of one or more devices sent by an application server;
determining, by the network device, the area parameters of the terminal device based on the identification information of the terminal device comprises:
determining, by the network device, the area parameters of the terminal device from the area parameters of each of the one or more devices based on the identification information of the terminal device.

14. The method according to any one of claims 1 to 13, wherein the network device is a core network device, and the terminal device is a zero-power device.

15. A communication method, comprising:
receiving, by a terminal device, a first message sent by a network device, wherein the first message is used by the terminal device to determine whether the terminal device is located in a first registration update area, the first registration update area is an area where the terminal device triggers a registration update process, and the first registration update area is one of a plurality of registration areas of the terminal device, wherein each of the plurality of registration areas is a candidate area where the terminal device can trigger the registration update process.

16. The method according to claim 15, wherein before receiving, by the terminal device, the first message sent by the network device, the method further comprising:
sending, by the terminal device, a second message to the network device, wherein the second message is used to trigger a registration process, and the second message carries identification information of the terminal device and/or area parameters of the terminal device.

17. The method according to claim 15 or 16, wherein the first message carries the plurality of registration areas of the terminal device.

18. The method according to claim 17, wherein after receiving, by the terminal device, the first message sent by the network device, the method further comprising:
determining, by the terminal device, that the terminal device is located in the first registration update area, when the terminal device moves from a first area to a second area and the second area is located in one of the plurality of registration areas, wherein the first area is different from the second area; and
sending, by the terminal device, a third message to the network device, wherein the third message is used to trigger the registration update process.

19. The method according to claim 15 or 16, wherein the first message carries the first registration update area.

20. The method according to claim 19, wherein the first message also carries a target registration area of the terminal device, wherein the target registration area is different from the first registration update area.

21. The method according to claim 19 or 20, wherein after receiving, by the terminal device, the first message sent by the network device, the method further comprises:
sending, by the terminal device, a third message to the network device when the terminal device moves from a third area to a fourth area and the fourth area is located within the first registration update area, wherein the third message is used to trigger the registration update process, and the third area is different from the fourth area.

22. The method according to claim 21, wherein after sending, by the terminal device, the third message to the network device, the method further comprises:
receiving, by the terminal device, a fourth message sent by the network device, wherein the fourth message carries a second registration update area of the terminal device, and the second registration update area is different from the first registration update area.

23. The method according to any one of claims 15 to 22, wherein each of the plurality of registration areas of the terminal device comprises one or more sub-areas, and different registration areas comprise different sub-areas.

24. The method according to claim 23, wherein an identifier of each sub-area comprises one of the following: a tracking area identity (TAI) of the sub-area or a tracking area code (TAC) of the sub-area.

25. The method according to any one of claims 15 to 24, wherein the network device is a core network device, and the terminal device is a zero-power device.

26. A network device, comprising:
a first communication unit, configured to send a first message to a terminal device, wherein the first message is used by the terminal device to determine whether the terminal device is located in a first registration update area, the first registration update area is an area where the terminal device triggers a registration update process, and the first registration update area is one of a plurality of registration areas of the terminal device, wherein each of the plurality of registration areas is a candidate area where the terminal device can trigger the registration update process.

27. The network device according to claim 26, wherein the first communication unit is configured to receive a second message sent by the terminal device before sending the first message to the terminal device, the second message is used to trigger a registration process and carries identification information of the terminal device and/or area parameters of the terminal device.

28. The network device according to claim 27, further comprising:
a first processing unit, configured to determine the area parameters of the terminal device based on the identification information of the terminal device and determine the plurality of registration areas of the terminal device based on the area parameters of the terminal device; or
configured to determine the plurality of registration areas of the terminal device based on the area parameters of the terminal device.

29. The network device according to any one of claims 26 to 28, wherein the first message carries the plurality of registration areas of the terminal device.

30. The network device according to claim 28, wherein the first processing unit is configured to determine a target registration area of the terminal device from the plurality of registration areas of the terminal device based on an area where the terminal device is located, after determining the plurality of registration areas of the terminal device based on the area parameters of the terminal device, and determine the first registration update area of the terminal device based on the target registration area.

31. The network device according to claim 30, wherein the first processing unit is configured to:
determine a registration area corresponding to the target registration area based on a moving route of the terminal device and determine the registration area corresponding to the target registration area as the first registration update area of the terminal device; or
determine the first registration update area of the terminal device based on a distance between each of the plurality of registration areas and the target registration area.

32. The network device according to any one of claims 26 to 28, 30, or 31, wherein the first message carries the first registration update area.

33. The network device according to claim 32, wherein the first message further carries the target registration area of the terminal device.

34. The network device according to claim 32 or 33, wherein
the first communication unit is configured to receive a third message sent by the terminal device in the first registration update area, after sending the first message to the terminal device, wherein the third message is used to trigger the registration update process, and send a fourth message to the terminal device, wherein the fourth message carries a second registration update area of the terminal device;
the first processing unit is configured to determine the second registration update area of the terminal device based on the first registration update area, wherein the second registration update area is different from the first registration update area.

35. The network device according to any one of claims 28 to 34, wherein the area parameters of the terminal device comprise: identifier of each of a plurality of sub-areas where the terminal device can trigger registration update;
wherein each of the plurality of registration areas of the terminal device comprises one or more of the plurality of sub-areas, and different registration areas comprise different sub-areas.

36. The network device according to claim 35, wherein an identifier of each sub-area comprises one of the following: a tracking area identity (TAI) of the sub-area or a tracking area code (TAC) of the sub-area.

37. The network device according to any one of claims 28 to 36, wherein the first processing unit is configured to obtain the area parameters of the terminal device from subscription data based on the identification information of the terminal device.

38. The network device according to any one of claims 28 to 36, wherein, the first processing unit is configured to receive area parameters of each of one or more devices sent by an application server through the first communication unit, before determining the area parameters of the terminal device based on the identification information of the terminal device; and determine the area parameters of the terminal device from the area parameters of each of the one or more devices based on the identification information of the terminal device.

39. The network device according to any one of claims 26 to 38, wherein the network device is a core network device, and the terminal device is a zero-power device.

40. A terminal device, comprising:
a second communication unit, configured to receive a first message sent by a network device, wherein the first message is used by the terminal device to determine whether the terminal device is located in a first registration update area, the first registration update area is an area where the terminal device triggers a registration update process, and the first registration update area is one of a plurality of registration areas of the terminal device, wherein each of the plurality of registration areas is a candidate area where the terminal device can trigger the registration update process.

41. The terminal device according to claim 40, wherein the second communication unit is configured to send a second message to the network device before receiving the first message sent by the network device, the second message is used to trigger a registration process and carries identification information of the terminal device and/or area parameters of the terminal device.

42. The terminal device according to claim 40 or 41, wherein the first message carries the plurality of registration areas of the terminal device.

43. The terminal device according to claim 42, further comprising:
a second processing unit, configured to determine that the terminal device is located in the first registration update area when the terminal device moves from a first area to a second area and the second area is located in one of the plurality of registration areas, wherein the first area is different from the second area; the second communication unit is configured to send a third message to the network device after receiving the first message sent by the network device, wherein the third message is used to trigger the registration update process.

44. The terminal device according to claim 40 or 41, wherein the first message carries the first registration update area.

45. The terminal device according to claim 44, wherein the first message also carries a target registration area of the terminal device, wherein the target registration area is different from the first registration update area.

46. The terminal device according to claim 44 or 45, wherein the second communication unit is configured to send a third message to the network device when the terminal device moves from a third area to a fourth area and the fourth area is located within the first registration update area, after receiving the first message sent by the network device, wherein the third message is used to trigger the registration update process, and the third area is different from the fourth area.

47. The terminal device according to claim 46, wherein the second communication unit is configured to receive a fourth message sent by the network device, after sending the third message to the network device, wherein the fourth message carries a second registration update area of the terminal device, and the second registration update area is different from the first registration update area.

48. The terminal device according to any one of claims 40 to 47, wherein each of the plurality of registration areas of the terminal device comprises one or more sub-areas, and different registration areas comprise different sub-areas.

49. The terminal device according to claim 48, wherein an identifier of each sub-area comprises one of the following: a tracking area identity (TAI) of the sub-area or a tracking area code (TAC) of the sub-area.

50. The terminal device according to any one of claims 40 to 49, wherein the network device is a core network device, and the terminal device is a zero-power device.

51. A network device, comprising: a transceiver, a processor, and a memory, wherein the memory is configured to store a computer program, and the processor is configured to invoke and execute the computer program stored in the memory to cause the network device to perform the method according to any one of claims 1 to 14.

52. A terminal device, comprising: a transceiver, a processor, and a memory, wherein the memory is configured to store a computer program, and the processor is configured to invoke and execute the computer program stored in the memory to cause the terminal device to perform the method according to any one of claims 15 to 25.

53. A chip, comprising: a processor, configured to invoke and execute a computer program from a memory to cause a device equipped with the chip to perform the method according to any one of claims 1 to 14 or 15 to 25.

54. A computer-readable storage medium, configured to store a computer program, wherein when the computer program is executed by a device, the device is caused to perform the method according to any one of claims 1 to 14 or 15 to 25.

55. A computer program product, comprising computer program instructions, wherein the computer program instructions cause a computer to perform the method according to any one of claims 1 to 14 or 15 to 25.

56. A computer program, wherein when executed on a computer, the computer program causes the computer to perform the method according to any one of claims 1 to 14 or 15 to 25.
